# EUROPEAN PATENT SPECIFICATION

(11) **EP 3 262 253 B1**
(45) Date of publication and mention of the grant of the patent: **06.02.2019**
(21) Application number: 16712506.1
(22) Date of filing: 23.02.2016
(51) Int. Cl.: E04H 17/12, A01G 17/14

(54) **SUPPORT POLE FOR FENCES OR AGRICULTURAL APPLICATIONS AND METHOD TO MAKE SAID SUPPORT POLE**
STÜTZPFOSTEN FÜR ZÄUNE ODER LANDWIRTSCHAFTLICHE ANWENDUNGEN UND VERFAHREN ZUR HERSTELLUNG DES BESAGTEN STÜTZPFOSTENS
PIEU DE SUPPORT POUR CLÔTURES OU APPLICATIONS AGRICOLES ET PROCÉDÉ DE FABRICATION DUDIT PIEU DE SUPPORT

(30) Priority: 23.02.2015 IT UD20150022
(43) Date of publication of application: 03.01.2018
(73) Proprietor: Prestil S.r.l., 33095 San Giorgio della Richinvelda (IT)
(72) Inventor: VOLPATTI, Maurizio, 33095 San Giorgio della Richinvelda (IT)
(74) Representative: Petraz, Gilberto Luigi
(86) International application number: PCT/IB2016/050962
(87) International publication number: WO 2016/135622

(56) References cited:
- EP-A2- 1 046 767
- DE-A1- 2 039 580
- DE-A1- 10 105 831
- FR-A- 1 443 375
- FR-A1- 2 601 846
- US-A- 1 170 230

## Description

### FIELD OF THE INVENTION

The present invention concerns a support pole for external applications, such as for fences or agricultural or gardening applications, to sustain or support vines for example, or climbing plants or any other type of plant, in particular fruit trees such as apple or pear trees, kiwi or lemon trees, or also shrubs. The support pole according to the present invention can be stuck in the ground and thus constitutes, with its protruding part, a vertical support element.

The present invention also concerns the method to make the support pole.

The support pole according to the present invention can possibly also be used in other sectors other than agriculture or fencing.

### BACKGROUND OF THE INVENTION

Support poles are known, having an oblong structure with an open or closed polygonal section, which are normally put in the ground to function as a support. In the field of fencing, gardening, agriculture, for example vine-growing, known poles are disposed at intervals of a certain distance, to constitute the vertical support elements between which metal wires or cables are stretched to function as a horizontal support. The cables are associated with the poles by attachment elements attached or made on at least one side of each support pole.

In a row of plants in a vineyard or fruit orchard in general, for example apple trees, pear trees, kiwi, lemon trees or other, it is known that the trunk, branches and fronds of the trees must be supported as they gradually grow, in order to give them a support, raised from the ground, thus promoting a correct growth of the tree and the fruit.

Known poles can be made of concrete, wood or metal depending on specific applications.

Concrete poles are particularly costly and heavy to handle, while wooden poles are not only expensive but also have a limited life.

Known metal poles have a substantially tubular cross section with an open or closed shape.

In particular, known poles with an open section can be open C-shaped defined by several reciprocally angled walls, connected in correspondence with connection portions to define more or less rounded edges of the support pole.

These known metal poles are usually obtained by bending a metal sheet with an oblong development.

It is also known to make stiffening ribs along the longitudinal development of the walls, which increase rigidity.

The stiffening ribs are made parallel to the longitudinal development of the support pole and confer upon it a greater capacity of mechanical resistance to flexion, compared with traditional solutions of support poles that are not provided with ribs.

This configuration of the ribs makes the support pole not very suitable to resist high flexion and torsion stresses and leads to its structural collapse.

Solutions of support poles are also known, described for example in documents EP-A-1.046.767 and US-A-1.170.230, where the pole is provided with a plurality of corrugations made on the walls and edges between the walls, and disposed orthogonal with respect to the oblong development of the pole. However, Applicant has verified that the orthogonal disposition of the corrugations entails a weakening of the pole if the latter is subjected to flexion and torsion stresses. Due to this disposition, and although they increase the resistance capacity compared with a non-corrugated pole, the corrugations define zones in correspondence with which the pole yields to flexion and/or torsion.

The known poles described above therefore have the disadvantage that they cannot resist the high stresses that can derive from the forces of thrust or traction developed by the fruit trees as they grow.

Another disadvantage of known support poles is that often they do not have a structural rigidity sufficient to resist the knocks and shaking deriving from the grape or fruit harvesting operations by automated machines.

Another disadvantage is that known support poles do not offer adequate resistance to stresses caused by the action of the wind.

There is therefore a need to perfect a support pole and a method to produce it that can overcome at least one of the disadvantages of the state of the art.

One purpose of the present invention is therefore to make a support pole that has high resistance to stresses such as torsion and flexion.

Another purpose of the present invention is to make a support pole simply, quickly and economically.

Another purpose of the present invention is to make a support pole that is light and manageable.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a support pole according to the present invention is preferably but not exclusively used in agricultural applications, or more in general in any external application, to support, for example, vines or any other type of plant, or to make fences.

According to the present invention, the support pole has an oblong development, along a longitudinal axis and is made from a sheet of metal bent to define a substantially polygonal cross section with a plurality of walls angled with respect to each other and connected, in a single body, by connection portions. The connection portions define the edges of the support pole.

According to one aspect of the present invention, at least in one part of longitudinal development of at least one of the connection portions between the walls, there are stiffening ribs with a development transverse to the oblong development of the support pole.

According to another aspect of the present invention, the stiffening ribs are provided with at least a segment of rib made at least in the connection portion and inclined with respect to the longitudinal axis by an angle of inclination with an amplitude comprised between 10° and 80°.

This solution allows to increase the mechanical resistance compared with known solutions, obtaining a support pole with a capacity to resist very strong stresses, for example at least two or three times higher than known support poles.

The particular configuration of the stiffening ribs confers on the support pole a greater capacity to resist at least flexion and torsion stresses.

In particular, the inclined distribution of the segments of rib allows to deflect the mechanical tensions, of flexion and torsion for example, that are concentrated along the stiffening ribs and in correspondence to the connection portion, or along the edges of the pole. In this way it is possible to prevent the pole from yielding in correspondence to one of the ribs, for example as described above for the known pole.

According to a preferential variant, the segment of rib is inclined with respect to the longitudinal axis by an angle of inclination with an amplitude comprised between 20° and 80°, even more preferably an amplitude comprised between 30° and 70°.

According to a variant, at least one of the walls and/or connection portions between the walls is provided with at least an attachment element in which support elements or fencing elements such as metal wires can be housed or inserted, for example during use. The attachment elements render the support pole suitable for application in the agricultural or fencing fields.

The attachment elements can be chosen from a group comprising: seatings, eyelets, holes, channels, grooves, teeth, hooks.

According to some variants, the cross section of the support pole can be either open or closed.

The present invention also concerns a method to make a support pole for fences or agricultural applications comprising the bending of a metal sheet to obtain a support pole with a substantially polygonal cross section defined by a plurality of walls angled with respect to each other and connected, in a single body, by connection portions.

According to one aspect of the present invention, the method also comprises the making of stiffening ribs in the metal sheet, with a development transverse to the oblong development of the support pole, and at least in one part of the longitudinal development of at least one of the connection portions between the walls.

According to another aspect of the method, making the ribs provides to make, at least in the connection portion, at least one segment of rib of the stiffening ribs that is inclined, with respect to the longitudinal axis of the pole, by an angle of inclination with an amplitude comprised between 10° and 80°.

These and other aspects, characteristics and advantages of the present disclosure will be better understood with reference to the following description, drawings and attached claims. The drawings, which are integrated and form part of the present description, show some embodiments of the present invention, and together with the description, are intended to describe the principles of the disclosure.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view of a part of a support pole according to the present invention;
- fig. 2 is a view from above of fig. 1;
- fig. 3 is a cross section view along the line III-III in fig. 2;
- fig. 4 is a view from above of a part of a first variant of a support pole according to the present invention;
- fig. 5 is a lateral view of fig. 4;
- fig. 6 is a cross section view along the line VI-VI in fig. 5;
- fig. 7 is a view from above of a part of a second variant of a support pole according to the present invention;
- fig. 8 is a lateral view of fig. 7;
- fig. 9 is a cross section view along the line IX-IX in fig. 8;
- fig. 10 is a perspective view of an enlarged detail of a support pole according to the present invention;
- fig. 11 is a first variant of a portion of a support pole according to the present invention;
- fig. 12 is a second variant of a portion of a support pole according to the present invention;
- fig. 13 is a third variant of a portion of a support pole according to the present invention;
- fig. 14 is a fourth variant of a portion of a support pole according to the present invention;
- fig. 15 is a fifth variant of a portion of a support pole according to the present invention.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

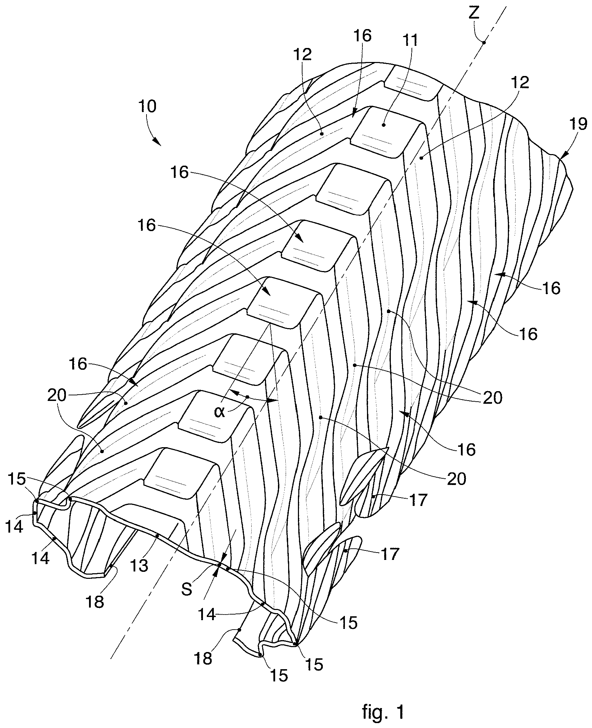

A support pole 10, shown only partly in fig. 1 for convenience, usable for example for external applications, in fences or for agricultural or garden applications, according to the present invention is defined in this case by a metal sheet 19 bent to define a substantially polygonal cross section, having a plurality of walls, in the cases shown here a plurality of lateral walls 14 and a central wall 13 to which the lateral walls 14 connect.

The lateral walls 14 and the central wall 13 are reciprocally angled and are connected in a single body by connection portions 15.

Referring to the cross section, by polygonal we mean a geometric shape consisting of all the rectilinear and/or curved segments, reciprocally angled, connected near their end edges.

The cross section can have a profile that alternates concave segments with convex segments, so as to increase the mechanical resistance of the support pole 10 and to define a desired development of the cross section profile.

In other variants, the support pole 10 thus obtained can have an open or closed cross section. The substantially closed cross section is obtained by bending, bringing end edges 18 of the metal sheet 19 into close proximity, until they correspond. The end edges 18 can be connected to obtain an effective closure of the section, for example by stapling or welding the end edges 18, which can be obtained using an oxyacetylene welding method, or electrode, submerged arc, MIG, MAG, TIG or plasma welding.

Figs. 1, 3, 6 and 9 show possible embodiments of support poles 10 having an open cross section, to define a substantial C-shape in which the end edges 18 define the open sides of the cross section.

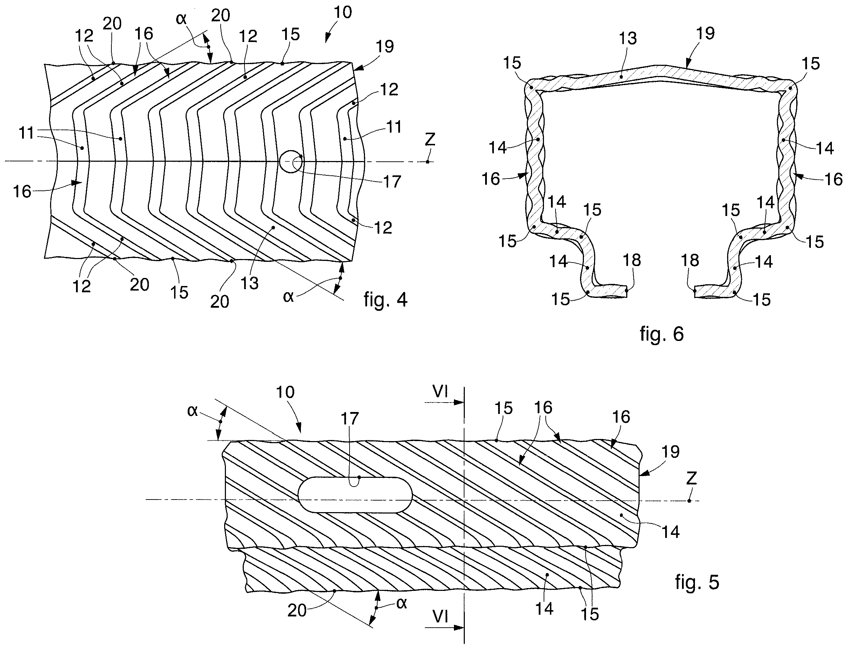

The connection portions 15 can be defined by connectors having connection radiuses comprised between 1mm and 8mm, to define a rather square cross section as shown in fig. 6, or a rounded cross section as shown in figs. 1, 3 and 9.

The support pole 10 obtained by extension of fig. 1 develops longitudinally along a longitudinal axis Z, identifying a much longer length than the sizes of the cross section.

The metal sheet 19 has a thickness S comprised between about 1mm and about 4mm, a length substantially equal to the length of the support pole 10, and a width, in the non-bent condition, substantially equal to the perimeter of the cross section of the support pole 10.

The metal sheet 19 can be made of cold or hot dip galvanized steel, or stainless steel. However, it is not excluded that in other solutions the sheet 19 is made of any other metal material or metal alloy, preferably having intrinsic anticorrosion properties or which are treated, for example coated, with an anticorrosion material.

According to the present invention, at least in one part of longitudinal development of at least one of the connection portions 15 between the central wall 13 and a lateral wall 14, or between two lateral walls 14, there are stiffening ribs 16 with a development transverse to the oblong development of the support pole 10, which are made to increase resistance to mechanical stresses such as torsion and flexion.

According to another aspect of the present invention, the stiffening ribs 16 are provided with at least a segment of rib 20 made at least in the connection portion 15 and inclined with respect to the longitudinal axis Z by an angle of inclination α with an amplitude comprised between 10° and 80°, preferably an amplitude comprised between 20° and 80°.

In particular, an angle α with an amplitude comprised between 20° and 80° allows to give the support pole 10 a greater capacity to resist torsion stresses.

In particular, the segment of rib 20 defines part of the stiffening rib 16.

According to a possible variant, at least one of the connection portions 15 is provided, along its whole longitudinal development, with a plurality of stiffening ribs 16 made transverse to the longitudinal development of the support pole 10 and having said segments of rib 20 disposed inclined by the angle of inclination α indicated above.

According to a variant, the stiffening ribs 16 extend from the connection portions 15 toward the walls 13, 14 adjacent to them. This allows to make the capacity of resistance to mechanical stresses uniform for the different stress conditions that the support pole 10 can be subjected to.

According to other variants, shown in figs. 1-9, the stiffening ribs 16 extend without a break in continuity both between the walls 13, 14 and also between the connection portions 15. This guarantees the resistance of the support pole 10 no matter what the installation orientation is, and irrespective of the disposition or the orientation of the mechanical stresses.

According to the variants in which the walls 13, 14 are provided with the stiffening ribs 16, the latter are also made transverse to the oblong development of the support pole 10. According to the variants shown in figs. 1-9, the support pole 10 comprises a central wall 13 and a plurality of lateral walls 14 connected to the central wall 13 and to each other by the connection portions 15.

In particular, in figs. 1, 3 and 9 the cross section is provided with a central wall 13 and with four lateral walls 14 connected to the central wall 13 and to each other in correspondence with the connection portions 15.

In fig. 6, the cross section of the support pole 10 is defined by a central wall 13 and by three lateral walls 14 connected to the central wall 13 and to each other in correspondence with the connection portions 15.

According to some variants, shown for example in figs. 1, 2, 4 and 7, the stiffening ribs 16 can comprise a first portion of rib 11 made in at least part of the central wall 13, and second portions of rib 12 connected to the first portion of rib 11 and which extend from the central wall 13 toward the connection portions 15 and the lateral walls 14.

According to the solutions in figs. 1, 2, 4 and 7, the first portion of rib 11 extends transverse to the longitudinal axis Z, in this case substantially orthogonal to the longitudinal axis Z.

According to the solutions in figs. 1, 2, 4 and 7, the second portions of rib 12 extend, on the contrary, inclined with respect to the first portion of rib 11, for example by said angle of inclination α.

The second portions of rib 12 comprise or also define the segments of rib 20.

According to the solutions in figs. 1, 2, 4 and 7, the second portions of rib 12 extend without a break in continuity from the first portion of rib 11 toward the end edges 18 through the lateral walls 14 and the connection portions 15, where they define said segments of rib 20.

According to the solutions in figs. 1, 2, 4 and 7, the second portions of rib 12 are symmetrical with respect to a plane perpendicular to the central wall 13 and passing through the longitudinal axis Z.

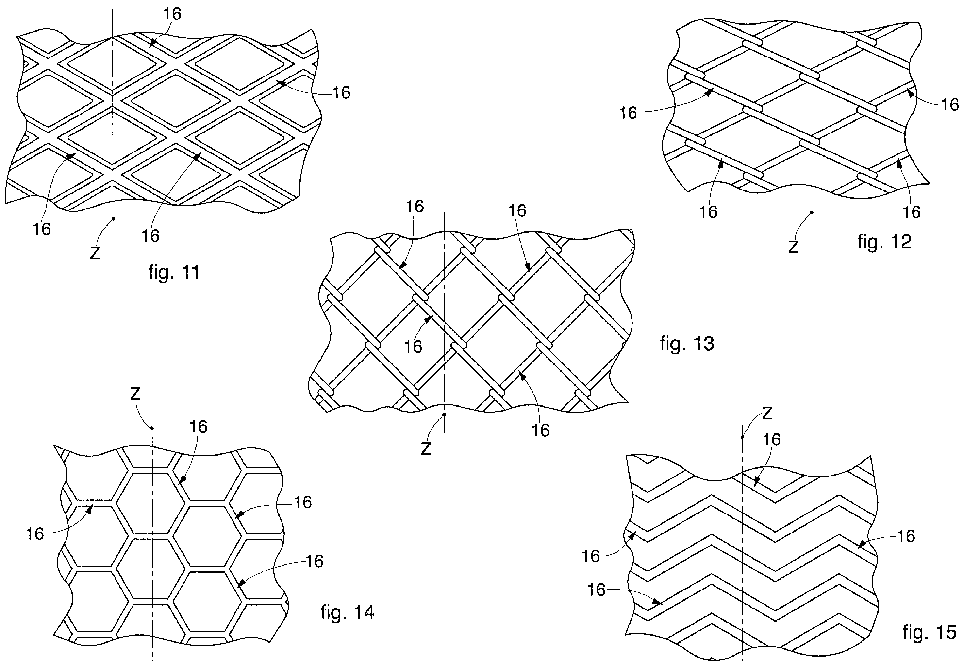

According to some variants, the stiffening ribs 16 made transverse in the walls 13, 14 can have a shape chosen from a group comprising a rhomboid mesh or mesh of lozenges (fig. 11), intertwined rhomboid mesh or mesh of intertwined lozenges (fig. 12), a intertwined square mesh (fig. 13), a hexagonal mesh (fig. 14) or zig-zag shaped (fig. 15).

According to the variants in figs. 1, 2, 5 and 8, at least one of either the central wall 13 and/or the lateral wall/walls 14, or the connection portions 15 defining the support pole 10, is provided with attachment elements 17 for the insertion of support or connection cables or wires.

The attachment elements 17 can be chosen from a group comprising: seatings, eyelets, holes, channels, grooves, teeth, hooks.

Merely by way of example, the attachment elements 17 can be made by punching or, alternatively or in combination, at least one cold deep drawing operation and a shearing operation and possibly a bending operation to advantageously determine the attachment element 17 in a single pass.

According to the variants in figs. 1, 2 and 10, the attachment elements 17 can be made without producing any waste of material. Examples of the variants are shown in figs. 1, 2 and 10, where the attachment elements 17 are defined by hooks and are made in a single body with the walls 13, 14 and by the incision of a portion of metal sheet 19 and subsequent shaping of said portion, or a portion of wall 13, 14 adjacent to it.

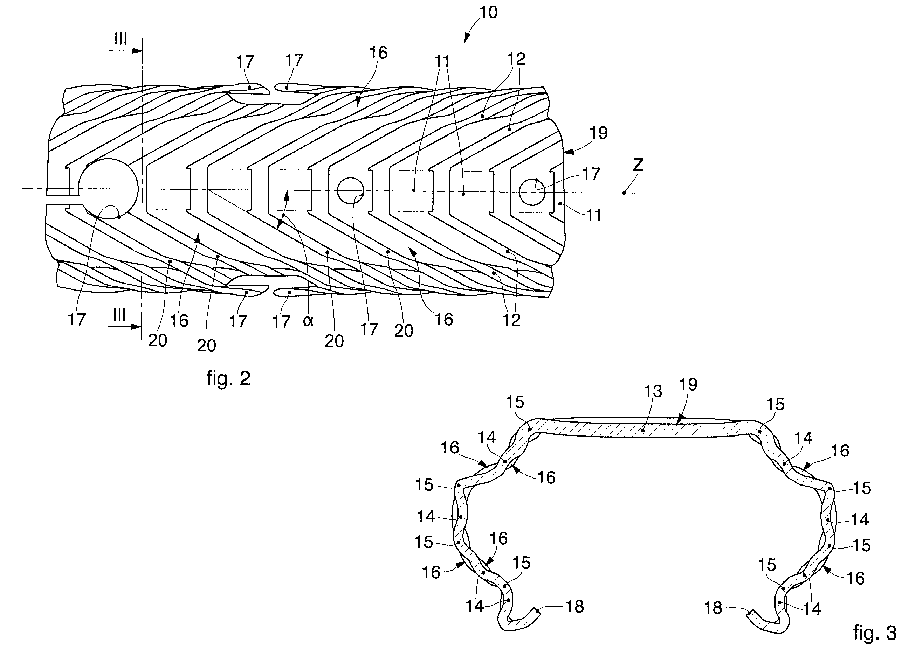

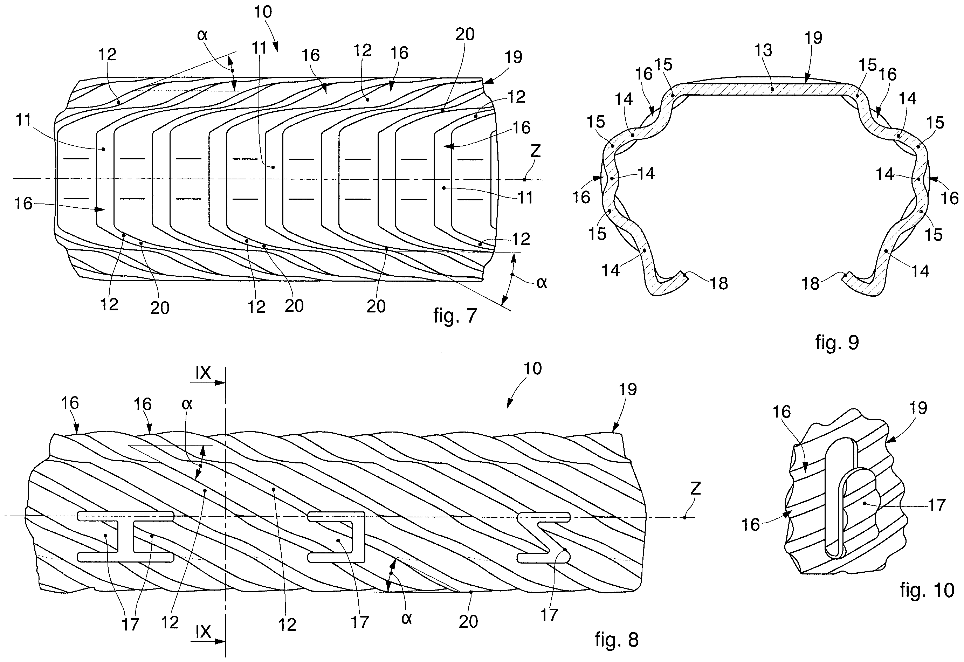

According to other variants, the attachment elements 17 can be made instead by removal of material, for example shearing, punching, holing, and can have a substantially round shape or O-shape, as in figs. 2, 4 and 5, or a C-shape, H-shape, Z-shape or S-shape, as in fig. 8.

In other embodiments, the support pole 10 can have a point (not shown in the drawings) made for example by welding a stake to one of the two terminal parts, to facilitate operations to insert it into the ground.

The present invention also concerns a method to make the support pole 10, and comprises:
- bending a metal sheet 19 to obtain a support pole 10 with an oblong development along a longitudinal axis Z and with a substantially polygonal cross section defined by a plurality of lateral walls 14 and a possible central wall 13, angled with respect to each other and connected by connection portions 15;
- making stiffening ribs 16 in the metal sheet 19, with a development transverse with respect to the oblong development of the support pole 10, and at least in one part of longitudinal development of at least one of the connection portions 15 between the central wall 13 and a lateral wall 14, or between two lateral walls 14.

The method according to the present invention provides that during the making of the stiffening ribs 16, at least in the connection portion 15, at least one segment of rib 20 of the stiffening rib 16 is made, which is inclined, with respect to the longitudinal axis Z, by an angle of inclination α with an amplitude comprised between 10° and 80°.

According to a variant, the stiffening ribs 16, and hence the segment of rib 20, can be made in the metal sheet 19 before the metal sheet 19 is bent.

According to another variant, at least one attachment element 17 of the type described above can be made on at least one of either the central wall 13 and/or the lateral wall/walls 14 and/or the connection portions 15 that make up the support pole 10.

According to possible solutions, the stiffening ribs 16 are obtained by plastic deformation of the metal sheet 19. This solution allows to obtain, simply and economically, the stiffening ribs 16 functional to the purposes of the present invention, obtaining a cross section of the support pole 10 with a thickness S substantially uniform everywhere, both between the walls 13, 14 and between the connection portions 15 and also where the stiffening ribs 16 are provided. According to this embodiment, a support pole 10 is therefore defined with corrugated walls, where the corrugations are defined by the stiffening ribs 16.

According to a possible solution, the method provides to:
- make a metal sheet 19 with a thickness S comprised between about 1mm and about 4mm, a length substantially equal to the length of the support pole 10, and a width, in the non-bent condition, substantially equal to the perimeter of the cross section of the support pole 10;
- make a plurality of stiffening ribs 16 in one or more directions transverse to the length of the metal sheet 19 and in which at least one segment of rib 20 is made at an angle of inclination α as defined above;
- bend the metal sheet 19 to define a plurality of walls 13, 14 angled to each other and connected by connection portions 15.

The stiffening ribs 16 can be made, for example, using rolls provided with surface ridges, pressed one against the other and between which the metal sheet 19 is made to pass to be deformed plastically.

The method can also comprise at least a step of making attachment elements 17 on one or more of the walls 13, 14 defining the support pole 10.

It is clear that modifications and/or additions of parts may be made to the support pole and method to make a support pole as described heretofore, without departing from the field and scope of the present invention.

It is also clear that, although the present invention has been described with reference to some specific examples, a person of skill in the art shall certainly be able to achieve many other equivalent forms of support pole and method to make the support pole 10, having the characteristics as set forth in the claims and hence all coming within the field of protection defined thereby.

## Claims

1. Support pole for fences or agricultural applications with an oblong development along a longitudinal axis (Z) and made from a metal sheet (19) bent to define a substantially polygonal cross section with a plurality of walls (13, 14) angled with respect to each other and connected, in a single body, by connection portions (15), wherein at least in one part of longitudinal development of at least one of the connection portions (15) between the walls (13, 14), there are stiffening ribs (16) with a development transverse with respect to said longitudinal axis (Z), **characterized in that** said stiffening ribs (16) are each provided with at least a segment of rib (20) made at least in said connection portion (15) and inclined with respect to said longitudinal axis (Z) by an angle of inclination (α) with an amplitude comprised between 10° and 80°.

2. Support pole as in claim 1, **characterized in that** said angle of inclination (α) has an amplitude comprised between 20° and 80°.

3. Support pole as in claim 1 or 2, **characterized in that** the at least one connection portion (15) is provided along the whole longitudinal development of said plurality of stiffening ribs (16).

4. Support pole as in any claim hereinbefore, **characterized in that** said stiffening ribs (16) extend from the connection portion (15) toward the walls (13, 14) adjacent to the latter.

5. Support pole as in any claim hereinbefore, **characterized in that** said stiffening ribs (16) extend without a break in continuity both between the walls (13, 14) and also between the connection portions (15).

6. Support pole as in any claim hereinbefore, **characterized in that** it comprises a central wall (13) and a plurality of lateral walls (14) connected in a single body to said central wall (13) by said connection portions (15), **and in that** said stiffening ribs (16) each comprise a first segment of rib (11) made in at least part of the central wall (13), and second segments of rib (12) connected to the first segment of rib (11) inclined with respect to the latter, and which extend from the central wall (13) toward the connection portions (15) and the lateral walls (14), said second portions of rib (12) also defining said segments of rib (20).

7. Support pole as in any claim hereinbefore, **characterized in that** at least one of said walls (13, 14) or said connection portions (15) is provided with at least one attachment element (17).

8. Method to make a support pole (10) for fences or agricultural applications comprising the bending of a metal sheet (19) to obtain said support pole (10) with an oblong development along a longitudinal axis (Z) and with a substantially polygonal cross section defined by a plurality of walls (13, 14) angled with respect to each other and connected, in a single body, by connection portions (15), and the making of stiffening ribs (16) in the metal sheet (19), with a development transverse to said longitudinal axis (Z), and at least in one part of longitudinal development of at least one of the connection portions (15), **characterized in that** the making of said stiffening ribs (16) provides to make, at least in said connection portion (15), at least one segment of rib (20) of said stiffening ribs (16) that is inclined, with respect to said longitudinal axis (Z), by an angle of inclination (α) with an amplitude comprised between 10° and 80°.

9. Method as in claim 8, **characterized in that** said stiffening ribs (16) are obtained by plastic deformation of said metal sheet (19).

10. Method as in claim 8 or 9, **characterized in that** at least one attachment element (17) is made on at least one of said walls (13, 14) or said connection portions (15).

## Patentansprüche

1. *Stützpfosten für Zäune oder landwirtschaftliche Anwendungen mit länglichem Verlauf entlang einer Längsachse (Z) und hergestellt aus einem Metallblech (19), das* so *gebogen ist, dass ein im Wesentlichen polygonaler Querschnitt mit einer Vielzahl an Wänden (13, 14) definiert wird, die zueinander gewinkelt sind und durch Verbindungsabschnitte (15) in einem einzigen Körper verbunden sind, wobei zumindest in einem Teil des Längsverlaufs von mindestens einem der Verbindungsabschnitte (15) zwischen den Wänden (13, 14) Versteifungsrippen (16) vorliegen, die in Bezug auf die Längsachse (Z) quer verlaufen, **dadurch gekennzeichnet, dass** die Versteifungsrippen (16) jeweils mit mindestens einem Rippensegment (20) versehen sind, das zumindest in dem Verbindungsabschnitt (15) ausgebildet ist und in Bezug auf die Längsachse (Z) mit einem Neigungswinkel (a) mit einer Amplitude zwischen 10° und 80° geneigt ist.*

2. *Stützpfosten gemäß Anspruch 1, **dadurch gekennzeichnet, dass** der Neigungswinkel (a) eine Amplitude zwischen 20° und 80° aufweist.*

3. *Stützpfosten gemäß Anspruch 1 oder 2, **dadurch gekennzeichnet, dass** der mindestens eine Verbindungsabschnitt (15) entlang des gesamten Längsverlaufs der Vielzahl an Versteifungsrippen (16) vorgesehen ist.*

4. *Stützpfosten gemäß irgendeinem der vorhergehenden Ansprüche, **dadurch gekennzeichnet, dass** sich die Versteifungsrippen (16) von dem Verbindungsabschnitt (15) zu den an diesen angrenzenden Wänden (13, 14) hin erstrecken.*

5. *Stützpfosten gemäß irgendeinem der vorhergehenden Ansprüche, **dadurch gekennzeichnet, dass** sich die Versteifungsrippen (16) ohne Unterbrechung durchgehend sowohl zwischen den Wänden (13, 14) als auch zwischen den Verbindungsabschnitten (15) erstrecken.*

6. *Stützpfosten gemäß irgendeinem der vorhergehenden Ansprüche, **dadurch gekennzeichnet, dass** er eine mittige Wand (13) und mehrere Seitenwände (14), die in einem einzigen Körper durch die Verbindungsabschnitte (15) mit der mittigen Wand (13) verbunden sind, umfasst, und dass die Versteifungsrippen (16) jeweils ein erstes Rippensegment (11), welches in zumindest einem Teil der mittigen Wand (13) ausgebildet ist, und zweite Rippensegmente (12), die mit dem ersten Rippensegment (11) verbunden und in Bezug auf dieses geneigt sind, und welche sich von der mittigen Wand (13) zu den Verbindungsabschnitten (15) und den Seitenwänden (14) hin erstrecken, umfasst, wobei die zweiten Rippenabschnitte (12) ebenso die Rippensegmente (20) definieren.*

7. *Stützpfosten gemäß irgendeinem der vorhergehenden Ansprüche, **dadurch gekennzeichnet, dass** mindestens eine der Wände (13, 14) oder einer der Verbindungsabschnitte (15) mit mindestens einem Befestigungselement (17) versehen ist*/*sind.*

8. *Verfahren zur Herstellung eines Stützpfostens (10) für Zäune oder landwirtschaftliche Anwendungen umfassend das Biegen eines Metallblech (19) zum Erhalt des Stützpfostens (10) mit einem länglichem Verlauf entlang einer Längsachse (Z) und mit einem im Wesentlichen polygonalen Querschnitt, der durch eine Vielzahl an Wänden (13, 14) definiert wird, die zueinander gewinkelt sind und durch Verbindungsabschnitte (15) in einem einzigen Körper verbunden sind, und das Herstellen von Versteifungsrippen (16) in dem Metallblech (19), die quer zu der Längsachse (Z) verlaufen, und zumindest in einem Teil des Längsverlaufs von mindestens einem der Verbindungsabschnitte (15), **dadurch gekennzeichnet, dass** die Herstellung der Versteifungsrippen (16) die Herstellung, zumindest in dem Verbindungsabschnitt (15), von mindestens einem Rippensegment (20) der Versteifungsrippen (16) vorsieht, welches in Bezug auf die Längsachse (Z) mit einem Neigungswinkel (a) mit einer Amplitude zwischen 10° und 80° geneigt ist.*

9. *Verfahren gemäß Anspruch 8, **dadurch gekennzeichnet, dass** die Versteifungsrippen (16) durch plastische Verformung des Metallblechs (19) erhalten werden.*

10. *Verfahren gemäß Anspruch 8 oder 9, **dadurch gekennzeichnet, dass** mindestens ein Befestigungselement (17) auf mindestens einer der Wände (13, 14) oder den Befestigungsabschnitten (15) ausgebildet wird.*

## Revendications

1. Poteau de support pour des clôtures ou des applications agricoles, ayant un développement oblong le long d'un axe longitudinal (Z) et réalisé à partir d'une tôle (19) pliée pour définir une section transversale sensiblement polygonale avec une pluralité de parois (13, 14) coudées les unes par rapport aux autres et reliées, en un seul corps, par des parties de liaison (15) ; des nervures de raidissement (16) étant situées au niveau d'au moins une partie du développement longitudinal d'au moins une des parties de liaison (15) entre les parois (13, 14), avec un développement transversal par rapport audit axe longitudinal (Z), **caractérisé en ce que** lesdites nervures de raidissement (16) sont munies chacune d'au moins un segment de nervure (20) réalisé au moins dans ladite partie de liaison (15) et incliné par rapport audit axe longitudinal (Z) d'un angle d'inclinaison (a) ayant une amplitude comprise entre 10° et 80°.

2. Poteau de support selon la revendication 1, **caractérisé en ce que** ledit angle d'inclinaison (a) a une amplitude comprise entre 20° et 80°.

3. Poteau de support selon la revendication 1 ou la revendication 2, **caractérisé en ce que** ladite au moins une partie de liaison (15) est prévue le long de l'ensemble du développement longitudinal de ladite pluralité de nervures de renforcement (16).

4. Poteau de support selon une revendication quelconque ci-dessus, **caractérisé en ce que** lesdites nervures de raidissement (16) s'étendent de la partie de liaison (15) vers les parois (13, 14) adjacentes à cette dernière.

5. Poteau de support selon une revendication quelconque ci-dessus, **caractérisé en ce que** lesdites nervures de raidissement (16) s'étendent sans rupture de continuité tant entre les parois (13, 14) qu'entre les parties de liaison (15).

6. Poteau de support selon une revendication quelconque ci-dessus, **caractérisé en ce qu'**il comprend une paroi centrale (13) et une pluralité de parois latérales (14) reliées en un seul tenant à ladite paroi centrale (13) par lesdites parties de liaison (15), et **en ce que** lesdites nervures de renforcement (16) comprennent chacune un premier segment de nervure (11) réalisé sur au moins une partie de la paroi centrale (13), et des deuxièmes segments de nervure (12) reliés au premier segment de nervure (11), inclinés par rapport à ce dernier, et qui s'étendent depuis la paroi centrale (13) vers les parties de liaison (15) et les parois latérales (14), lesdites deuxièmes parties de nervure (12) définissant également lesdits segments de nervure (20).

7. Poteau de support selon une revendication quelconque ci-dessus, **caractérisé en ce qu'**au moins l'une desdites parois (13, 14) ou desdites parties de liaison (15) est munie d'au moins un élément de fixation (17).

8. Procédé de fabrication d'un poteau de support (10) pour des clôtures ou des applications agricoles comprenant le fait de cintrer une tôle (19) pour obtenir ledit poteau de support (10) avec un développement oblong le long d'un axe longitudinal (Z) et avec une section transversale sensiblement polygonale définie par plusieurs parois (13, 14) coudées les unes par rapport aux autres et reliées, d'un seul tenant, par des parties de liaison (15), et le fait de réaliser des nervures de renforcement (16) dans la tôle métallique (19), avec un développement transversal audit axe longitudinal (Z), et au moins sur une partie du développement longitudinal d'au moins l'une des parties de liaison (15), **caractérisé en ce que** le fait de fabriquer lesdites nervures de renforcement (16) inclut le fait de réaliser, au moins dans ladite partie de liaison (15), au moins un segment de nervure (20) desdites nervures de renforcement (16) qui est incliné, par rapport audit axe longitudinal (Z), selon un angle d'inclinaison (a) ayant une amplitude comprise entre 10° et 80°.

9. Procédé selon la revendication 8, **caractérisé en ce que** lesdites nervures de raidissement (16) sont obtenues par déformation plastique de ladite tôle (19).

10. Procédé selon la revendication 8 ou la revendication 9, **caractérisé en ce qu'**au moins un élément de fixation (17) est réalisé sur au moins une desdites parois (13, 14) ou desdites parties de liaison (15).
